# EUROPÄISCHE PATENTANMELDUNG

(11) **EP 1 742 216 A1**
(43) Veröffentlichungstag der Anmeldung: **10.01.2007**
(21) Anmeldenummer: 06021952.4
(22) Anmeldetag: 17.06.2004
(51) Int. Cl.: G11B 23/30, G11B 23/34, G11B 23/38, G03B 31/02

(54) **Kennzeichnung eines Trägermaterials für zur Wiedergabe bestimmte Informationen**

(30) Priorität: 11.07.2003 EP 03015888; 02.03.2004 DE 202004003254 U
(62) Teilanmeldung aus: 04740075.9
(71) Anmelder: Lehmann, Gerhard, 12359 Berlin (DE)
(72) Erfinder: Lehmann, Gerhard, 12359 Berlin (DE)
(74) Vertreter: Röthinger, Rainer

(57) **Zusammenfassung**

Es wird ein Verfahren zum Kennzeichnen eines maschinell auslesbaren Trägers (10) beschrieben. Der Träger, beispielsweise eine Schallplatte oder ein Magnetband, beinhaltet Informationen, die in einer kontinuierlichen Abfolge auf dem Träger enthalten und zur optischen oder akustischen Wiedergabe bestimmt sind. Im Bereich dieser akustischen oder optischen Informationen wird eine den Träger individualisierende Abfolge von Markierungen (14) ausgebildet, die zusammen mit den akustischen oder optischen Informationen auslesbar ist.

## Beschreibung

### Gebiet der Erfindung

Die Erfindung betrifft maschinell auslesbare Trägermaterialien. Genauer gesagt betrifft die Erfindung die Individualisierung derartiger Trägermaterialien.

### Hintergrund der Erfindung

Mechanismen zur Wiedergabe von Informationen stehen im Mittelpunkt vieler technischer Gebiete. Üblicherweise sind die zur Wiedergabe bestimmten Informationen auf einem körperlichen Träger enthalten, der mittels geeigneter Vorrichtungen ausgelesen wird. Anschließend werden die ausgelesenen Informationen optisch, akustisch, kombiniert optisch und akustisch oder auf sonstige wahrnehmbare Weise wiedergegeben.

Verschiedene Gegebenheiten im Zusammenhang mit der Handhabung des Trägers lassen dessen Kennzeichnung wünschenswert erscheinen. So besteht bei der Produktion der Träger häufig das Erfordernis, die Träger mit einer individualisierenden Kennzeichnung wie beispielsweise einer fortlaufenden Seriennummer oder einer Chargenbezeichnung zu versehen. Eine derartige Kennzeichnung erleichtert das nachträgliche Ermitteln von Produktionsstätten, Produktionsparametern, Vertriebswegen, usw.

In der Regel erfolgt das Kennzeichnen des Trägers dadurch, dass beispielsweise eine Seriennummer mittels geeigneter Druck- oder Graviertechniken auf einer Oberfläche des Trägers aufgebracht wird. Um die Wiedergabe der Informationen nicht zu beeinträchtigen, wird darauf geachtet, dass die Kennzeichnung beabstandet von denjenigen Bereichen des Trägers angebracht wird, welche die zur Wiedergabe bestimmten Informationen beinhalten.

In der Praxis hat sich herausgestellt, dass herkömmliche Kennzeichnungen häufig absichtlich und unbeabsichtigt manipuliert werden.

Der Erfindung liegt die Aufgabe zugrunde, einen verbesserten Ansatz zum Kennzeichnen eines maschinell auslesbaren Trägers anzugeben, der zur Wiedergabe bestimmte Informationen beinhaltet.

### Kurzer Abriss der Erfindung

Diese Aufgabe wird erfindungsgemäß gelöst durch ein Verfahren zum Kennzeichnen eines maschinell auslesbaren Trägers, der Informationen beinhaltet, die in einer kontinuierlichen Abfolge auf den Träger enthalten und zur Wiedergabe bestimmt sind, wobei im Bereich der zur Wiedergabe bestimmten Informationen eine den Träger individualisierende Abfolge von Markierungen ausgebildet wird, die zusammen mit den zur Wiedergabe bestimmten Informationen auslesbar ist.

Diese Vorhergehensweise ermöglicht es, die zur Kennzeichnung des Trägers vorgesehenen Markierungen mit den zur Wiedergabe bestimmten Informationen in eindeutiger Weise zu koppeln. Die Koppelung kann eine den Träger individualisierende Änderung der zur Wiedergabe bestimmten Informationen zur Folge haben, so dass auch die Wiedergabe der Informationen in einer den Träger individualisierenden Weise geändert ist.

Eine Wiedergabe der auf dem Träger enthaltenen Informationen kann auf optische, akustische, kombiniert optische und akustische oder sonstige Weise erfolgen. Bei den zur Wiedergabe bestimmten Informationen kann es sich daher um Toninformationen oder um Bildinformationen handeln. Weiterhin ist es denkbar, dass auf dem Träger sowohl Ton- als auch zugehörige Bildinformationen enthalten sind.

Der Träger kann die zur Wiedergabe bestimmten Informationen in unterschiedlichen Formaten enthalten. Es kann sich bei den zur Wiedergabe bestimmten Informationen beispielsweise um analoge Informationen handeln. Möglich ist auch, dass die zur Wiedergabe bestimmten Informationen vom Träger in einem digitalen Format bereitgestellt werden. Digitale Informationen können vor ihrer Wiedergabe in ein analoges Format gewandelt werden.

Das Ausbilden der Markierungen auf dem Träger kann gleichzeitig mit dem Aufbringen der zur Wiedergabe bestimmten Informationen erfolgen. In diesem Fall können die Markierungen also bereits in den zur Wiedergabe bestimmten Informationen enthalten sein. Möglich ist jedoch auch, die Markierungen zeitlich getrennt von dem Aufbringen der zur Wiedergabe bestimmten Informationen auf dem Träger auszubilden. Dies bedeutet, dass die Markierungen bereits vor oder erst nach dem Aufbringen der zur Wiedergabe bestimmten Informationen auf dem Träger ausgebildet werden.

Das Ausbilden der Markierungen kann auf unterschiedlichste Art und Weise geschehen. So kann das Ausbilden der Markierungen eine Änderung von magnetischen, mechanischen oder optischen Eigenschaften des Trägers beinhalten. Auch eine gleichzeitige Änderung mehrerer dieser Eigenschaften des Trägers ist möglich. Beispielhaft genannt sei das Ausbilden der Markierungen durch gleichzeitige Änderung der mechanischen und optischen Eigenschaften des Trägers. Wie bereits erwähnt, können die Markierungen derart ausgebildet sein, dass sie zusammen mit den zur Wiedergabe bestimmten Informationen auslesbar sind. Es ist daher in der Regel zweckmäßig, dass sowohl die Markierungen als auch die zur Wiedergabe bestimmten Informationen durch Änderung derselben Eigenschaft oder Eigenschaften des Trägers ausgebildet werden.

Die Markierungen können durch mechanisches Einwirken auf den Träger oder berührungslos ausgebildet werden. Das berührungslose Ausbilden der Markierungen ist beispielsweise mittels eines Lasers möglich.

Gemäß einem weiteren Aspekt der vorliegenden Erfindung wird ein maschinell auslesbarer Träger für Informationen, die in einer kontinuierlichen Abfolge auf dem Träger enthalten und zur Wiedergabe bestimmt sind, zur Verfügung gestellt. Im Bereich der zur Wiedergabe bestimmten Informationen ist eine den Träger individualisierende Abfolge von Markierungen ausgebildet, die zusammen mit den zur Wiedergabe bestimmten Informationen auslesbar ist.

Was die körperliche Ausgestaltung des Trägers anbelangt, stehen verschiedene Möglichkeiten zur Verfügung. Aus Kompatibilitätsgründen ist es zweckmäßig, wenn der erfindungsgemäße Träger die Gestalt eines herkömmlichen Datenträgers aufweist. Können Kompabilitätsüberlegungen vernachlässigt werden, können auch anderweitige Träger zum Einsatz gelangen. Der Träger kann eine im Wesentlichen planare Gestalt (z.B. scheiben- oder bandförmig) besitzen.

Das Auslesen der zur Wiedergabe bestimmten Informationen mit den dazugehörigen Markierungen kann mittels herkömmlicher Vorrichtungen erfolgen. Es kann auf magnetische, mechanische oder optische Ausleseverfahren zurückgegriffen werden.

Wie bereits erläutert, werden die Markierungen in einer den Träger individualisierenden Abfolge im Bereich der zur Wiedergabe bestimmten Information ausgebildet. Dies bedeutet, dass die Abfolge von Markierungen einen den Träger kennzeichnende Funktion besitzt. Die Markierungen sind vorzugsweise einzeln oder in ihrer Gesamtheit nicht unmittelbar lesbar. Um dieses Erfordernis zu erfüllen, kann die Abfolge von Markierungen einen Identifizierungs-Code darstellen. Bei dem Identifizierungs-Code kann es sich um einen binären Code oder um einen Barcode handeln.

Bei einem binären Code werden in einer Abfolge von Markierungen gezielt einzelne Markierungen ausgebildet bzw. nicht ausgebildet. Der binäre Code ist daher durch das Vorhandensein bzw. das Fehlen einzelner Markierungen bestimmt. Bei einem Barcode (auch Balken- oder Strichcode genannt) handelt es sich um eine Abfolge von Markierungen unterschiedlicher Stärke, d.h. unterschiedlicher räumlicher Ausdehnung. Andere Codierungsarten, die mit Hilfe einer Abfolge von Markierungen implementierbar sind, können ebenfalls zum Kennzeichnen des Trägers verwendet werden.

Die Markierungen können derart auf dem Träger ausgebildet sein, dass die Wahrnehmung der wiedergegebenen Informationen seitens eines Publikums nicht oder nur kaum gestört ist. Es kann daher erforderlich sein, zum Erfassen der in den zur Wiedergabe bestimmten Informationen enthaltenen Markierungen spezielle Erfassungstechniken anzuwenden. Derartige Erfassungstechniken laufen in der Regel vollautomatisiert ab.

Um die sinnliche Wahrnehmung der wiedergegebenen Informationen nicht oder nur unmerklich zu beeinträchtigen, sollte eine einzelne der Markierungen die wiedergegebenen Informationen weniger als 250 ms und insbesondere weniger als 100 ms beeinflussen. Von einer nicht oder nur kaum wahrnehmbaren Beeinflussung der wiedergegebenen Informationen kann in Abhängigkeit von einer Auslesegeschwindigkeit der zur Wiedergabe bestimmten Informationen in der Regel dann gesprochen werden, wenn eine einzelne der Markierungen senkrecht zu einer Ausleserichtung eine Ausdehnung von weniger als ungefähr 500 µm und insbesondere von weniger als ungefähr 200 µm besitzt.

Die den Träger individualisierende Abfolge von Markierungen kann lediglich ein einziges Mal auf dem Träger ausgebildet sein. Es kann jedoch auch daran gedacht werden, die Abfolge von Markierungen mehrfach und räumlich versetzt auf dem Träger auszubilden. Dies erleichtert deren Auffindung.

Gemäß einer Weiterbildung der Erfindung sind auf dem Träger in einem ersten Abschnitt zur Wiedergabe bestimmte analoge Informationen und in wenigstens einem zweiten Abschnitt zur Wiedergabe bestimmte digitale Informationen enthalten. Die den Träger individualisierende Abfolge von Markierungen kann ausschließlich in dem ersten Abschnitt (also im Bereich der zur Wiedergabe bestimmten analogen Informationen) ausgebildet sein, ausschließlich in dem zweiten Bereich oder gleichzeitig in beiden Bereichen.

Die analogen und digitalen Informationen können sich entsprechen. Mit anderen Worten, die analogen und digitalen Informationen können in redundanter Weise vorgesehen sein und inhaltlich übereinstimmen. Dies wäre beispielsweise dann zweckmäßig, wenn der zweite Abschnitt des Trägers (mit den digitalen Informationen) als primäre Informationsquelle dient und der erste Abschnitt (mit den analogen Informationen) als sekundäre (oder redundante) Informationsquelle. Die sekundäre Informationsquelle kann für solche Fälle vorgesehen sein, in denen die primäre Informationsquelle nicht oder nur beschränkt zur Verfügung steht oder die zum Auslesen vorhandenen technischen Mittel lediglich ein Auslesen der analogen Informationen gestatten. Es könnte natürlich auch daran gedacht werden, die Markierungen anstatt im ersten Abschnitt des Trägers im zweiten Abschnitt auszubilden. Diese Vorhergehensweise wäre beispielsweise dann denkbar, wenn der erste Abschnitt als primäre Informationsquelle fungiert.

Die digitalen Informationen, welche den analogen Informationen entsprechen, im Bereich derer die Markierungen ausgebildet sind, können nicht vorhanden und/oder nicht auslesbar sein. Durch das stellenweise Fortlassen oder Unlesbarmachen der digitalen Informationen kann ein Übergang von der primären auf die sekundäre Informationsquelle erzwungen werden. Auf diese Weise wird gleichzeitig ein stellenweises Auslesen der analogen Informationen mit der den Träger individualisierenden Abfolge von Markierungen erreicht.

Der Träger kann dort, wo die nicht auslesbaren digitalen Informationen ausgebildet sind (oder waren), nachträglich geänderte optische Eigenschaften aufweisen. So können in einem ersten Schritt die digitalen Informationen mit dem Träger assoziiert werden und in einem nachfolgenden zweiten Schritt können die digitalen Informationen stellenweise mechanisch oder optisch (z.B. mittels eines Lasers) geändert werden.

Bei dem die analogen Informationen enthaltenden ersten Trägerabschnitt kann es sich um eine Lichttonspur handeln und bei dem die digitalen Informationen enthaltenden zweiten Trägerabschnitt um eine digitale Tonspur. Es können auch gleichzeitig mehrere digitale Tonspuren vorgesehen sein. In diesem Fall können eine, mehrere oder alle digitalen Tonspuren stellenweise nicht vorhanden und/oder nicht auslesbar sein. Vorzugsweise ist die digitale Tonspur an einer zu den Markierungen benachbarten Stelle nicht vorhanden und/oder nicht auslesbar.

Die digitale Tonspur kann in einem solchen Bereich nicht vorhanden und/oder nicht auslesbar sein, der inhaltlich dem Bereich der analogen Tonspur entspricht, in dem die Markierungen ausgebildet sind.

Die Erfindung beinhaltet weiterhin einen gekennzeichneten Träger, der zur Wiedergabe bestimmte Informationen enthält und durch Kopieren des vorstehend erläuterten Trägers (des "Ur-Träger") erhalten wurde. Die zur Wiedergabe bestimmten Informationen (einschließlich der den Ur-Träger individualisierenden Abfolge von Markierungen) können auf dem durch Kopieren des Ur-Trägers erhaltenen Träger in einem geänderten Format enthalten sein. Insbesondere müssen die zur Wiedergabe bestimmten Informationen auf der Kopie nicht mehr in einer kontinuierlichen Abfolge enthalten sein. Außerdem wäre es denkbar, dass das Kopieren Formatierungsmechanismen wie beispielsweise eine Analog/Digital-Wandlung umfasst. Während die zur Wiedergabe bestimmten Informationen auf dem Ur-Träger beispielsweise in einem analogen Format vorliegen können, können sie auf dem durch Kopieren des Ur-Trägers erhaltenen Träger (z.B. einer CD, einer CD-ROM, einer DVD oder einer DVD-ROM) in digitaler Form abgespeichert sein.

Gemäß einem weiteren Aspekt der Erfindung wird ein Verfahren zum Identifizieren eines Ur-Trägers, insbesondere des einer Kopie zugrunde liegenden Ur-Trägers, zur Verfügung gestellt. Das Verfahren enthält die Schritte des maschinellen Auslesens der auf dem zur Verfügung stehenden Träger (dem Ur-Träger oder der Kopie) enthaltenen und zur Wiedergabe bestimmten Informationen in einem mit den Markierungen versehenen Bereich, des Auswertens der ausgelesenen Informationen zum Ermitteln der Abfolge von Markierungen sowie des Identifizierens des Ur-Trägers auf der Grundlage der ermittelten Abfolge von Markierungen.

Das Auswerten der ausgelesenen Informationen kann eine Wiedergabe der ausgelesenen Informationen und eine Analyse der wiedergegebenen Informationen umfassen. Dies bedeutet, dass die Abfolge von Markierungen nicht unmittelbar auf der Grundlage der ausgelesenen Informationen sondern anhand der beispielsweise akustisch oder optisch wiedergegebenen Informationen bestimmt werden kann. Zum Ermitteln der Abfolge der Markierungen in den ausgelesenen oder wiedergegebenen Informationen kann eine Bild- und/oder Spektral-Analyse verwendet werden. Weiterhin können Mechanismen wie eine Bild- und/oder Tonfilterung zum Einsatz gelangen.

Das Ermitteln der Abfolge von Markierungen kann auf der Grundlage von Referenz-Informationen erfolgen. Sofern nicht markierte Referenz-Informationen zur Verfügung stehen, ist eine Identifizierung der einzelnen Markierungen auf der Grundlage eines Vergleichs der vom Träger ausgelesenen und zur Wiedergabe bestimmten oder bereits wiedergegebenen Informationen mit diesen Referenz-Informationen möglich.

### Kurze Beschreibung der Zeichnungen

Weitere Vorteile und Einzelheiten der Erfindung ergeben sich aus der nachfolgenden Beschreibung bevorzugter Ausführungsbeispiele und aus den Figuren. Es zeigt:
- Fig. 1: ein erstes Ausführungsbeispiel eines erfindungsgemäßen Trägers in Gestalt einer Schallplatte;
- Fig. 2: ein zweites Ausführungsbeispiel eines erfindungsgemäßen Trägers in Gestalt eines Magnetbandes;
- Fig. 3a: ein drittes Ausführungsbeispiel eines erfindungsgemäßen Trägers in Gestalt eines Zelluloid-Films;
- Fig. 3b: eine Abwandlung des dritten Ausführungsbeispiels gemäß Fig. 3a;
- Fig. 4: eine weitere Abwandlung des dritten Ausführungsbeispiels gemäß Fig. 3a; und
- Fig. 5: ein gemessenes Diagramm zur Ermittlung der in wiedergegebenen Toninformationen enthaltenen Abfolge von Markierungen.

### Beschreibung bevorzugter Ausführungsformen

Nachfolgend werden bevorzugte Ausführungsformen erfindungsgemäßer Träger und erfindungsgemäßer Kennzeichnungsverfahren für Träger erläutert.

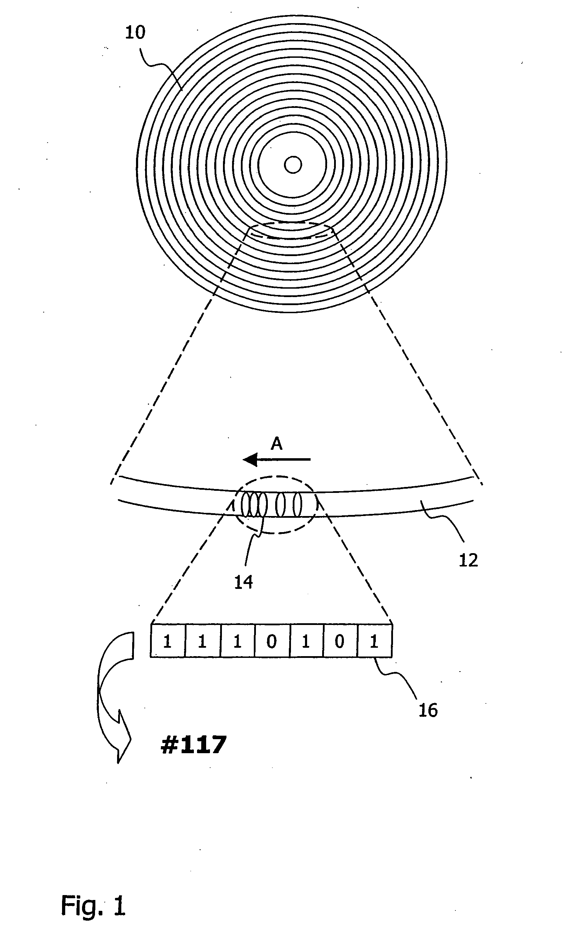

Fig. 1 zeigt einen ersten erfindungsgemäßen Träger für analoge Toninformationen in Gestalt einer Schallplatte 10. Die Toninformationen sind bei der Schallplatte 10 in einer kontinuierlichen Abfolge (z.B. als Lied) und logisch aufeinanderfolgend im Bereich einer spiralförmigen Rille enthalten. Genauer gesagt sind die Toninformationen durch die strukturellen Eigenschaften (Erhebungen/Vertiefungen) der Rille festgelegt.

In Fig. 1 ist ein Abschnitt der spiralförmigen Rille 12 vergrößert dargestellt. Der Deutlichkeit halber sind die Toninformationen, d.h. die im Bereich der Rille 12 ausgebildeten Erhebungen und Vertiefungen, nicht eingezeichnet. Eingezeichnet ist jedoch eine Abfolge von Markierungen 14, die in der Rille 12 und damit im Bereich der Toninformationen ausgebildet ist. Die Markierungen 14 sind im Größenverhältnis zur Rille 12 nicht maßstabsgerecht dargestellt. Tatsächlich werden die Markierungen 14 derart ausgebildet, dass die Wiedergabe der Toninformationen beim Abspielen der Schallplatte 10 auf einem Plattenspieler für einen Hörer kaum wahrnehmbar beeinflusst wird. Um beispielsweise den Musikgenuss nicht zu beeinträchtigen, können die Markierungen 14 in einem leisen Übergangsabschnitt zwischen zwei aufeinanderfolgenden Titeln ausgebildet werden. Sollen die Markierungen hingegen akustisch weitgehend verborgen werden, kann daran gedacht werden, die Markierungen 14 innerhalb eines Titels vorzusehen.

Wie sich aus Fig. 1 ergibt, kann die Abfolge von Markierungen 14 als ein binärer Code 16 aufgefasst werden. In Bezug auf eine durch den Pfeil A gekennzeichnete Ausleserichtung bilden die Markierungen 14 im Beispielfall von Fig. 1 die binäre Zahl 1110101. Diese binäre Zahl entspricht der Dezimalzahl 117. Mit anderen Worten, der Schallplatte 10 ist die Kennzeichnung 117 zugeordnet. Bei dieser Kennzeichnung kann es sich beispielsweise um eine Seriennummer oder eine Chargenbezeichnung handeln.

Die Markierungen 14 sind berührungslos mittels eines Lasers ausgebildet worden. Das Ausbilden der Markierungen 14 erfolgte nach dem Pressen der Schallplatte 10. Es wäre jedoch auch möglich, die Markierungen 14 beim Pressen der Schallplatte 10 und damit gleichzeitig mit den Toninformationen auszubilden.

Wie sich aus Fig. 1 ergibt, erstrecken sich die einzelnen Markierungen 14 im Wesentlichen senkrecht zur Ausleserichtung A. Die Breite einer einzelnen der Markierungen senkrecht zur Ausleserichtung A beträgt weniger als ungefähr 50 µm.

Bei der Wiedergabe der auf der Schallplatte 10 enthaltenen Toninformationen werden diese in einer die Schallplatte 10 individualisierenden Weise geändert, wenn die Nadel des Plattenspielers die Abfolge von Markierungen 14 abtastet, d.h. ausliest.

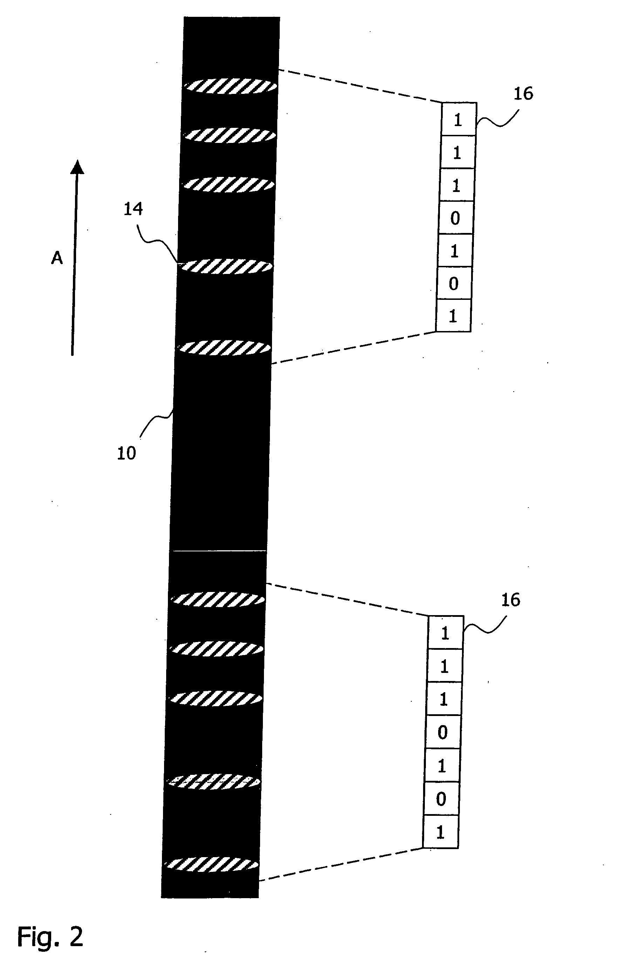

In Fig. 2 ist ein zweites Ausführungsbeispiel eines erfindungsgemäßen Trägers in Gestalt eines Magnetbandes 10 ausschnittsweise dargestellt. Auf dem Magnetband 10 sind analoge oder digitale Ton- und/oder Bildinformationen aufgezeichnet. Diese zur Wiedergabe bestimmten Informationen sind in einer kontinuierlichen Abfolge entlang der durch den Pfeil A gekennzeichneten Ausleserichtung auf dem Magnetband 10 enthalten.

Wie Fig. 2 entnommen werden kann, ist im Bereich der zur Wiedergabe bestimmten Informationen eine sich zweimal wiederholende Abfolge von Markierungen 14 ausgebildet. Die Markierungen 14 wurden durch lokale Änderung der magnetischen Eigenschaften des Magnetbands 10 erhalten und nach dem Aufzeichnen der zur Wiedergabe bestimmten Informationen ausgebildet. Der Deutlichkeit halber sind die einzelnen Markierungen 14 in Fig. 2 als schraffierte Ellipsen dargestellt. In Wirklichkeit sind die Markierungen 14 visuell nicht erfassbar.

Wie bereits im Zusammenhang mit Fig. 1 erläutert, repräsentiert die Abfolge von Markierungen 14 einen binären Code 16. Genauer gesagt steht die Abfolge von Markierungen 14 für die binäre Zahl 1 1 1 0 1 0 1 (Dezimal 117). Die Abfolge von Markierungen 14 ist daher geeignet, das Magnetband 10 in individualisierender Weise zu kennzeichnen.

Die Abfolge von Markierungen 14 wird beim Abspielen des Magnetbands 10 zusammen mit den zur Wiedergabe bestimmten Informationen ausgelesen und macht sich in einer das Magnetband 10 individualisierenden Weise bei der Wiedergabe der Informationen bemerkbar. Die geometrischen Dimensionen der Markierungen 14 sowie die Stärke der Änderung der magnetischen Eigenschaften im Bereich der Markierungen 14 sind derart gewählt, dass die Wahrnehmung der wiedergegebenen Informationen seitens des Publikums nicht oder nur unwesentlich beeinflusst ist.

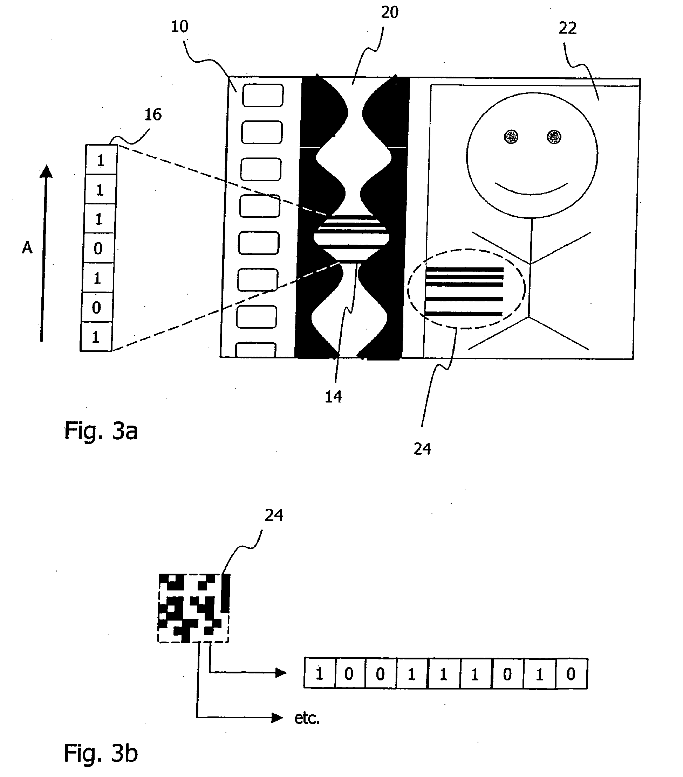

In Fig. 3a ist ein drittes Ausführungsbeispiel eines erfindungsgemäßen Trägers in Gestalt eines mit analogen Ton- und Bildinformationen versehenen, bandförmigen Zelluoid-Films 10 zur Wiedergabe mittels eines Filmprojektors dargestellt. Die Toninformationen sind in einer kontinuierlichen Abfolge als Lichttonspur 20 ausgebildet. Die Bildinformationen sind ebenfalls in einer kontinuierlichen Abfolge z.B. als Kinofilm) in einem der Lichttonspur 20 benachbarten Abschnitt 22 enthalten.

In Fig. 3a ist deutlich zu erkennen, dass im Bereich der Lichttonspur 20 eine Abfolge von parallelen, strichförmigen Markierungen 14 ausgebildet ist. Hinsichtlich einer Ausleserichtung A kann die Abfolge von Markierungen 14 als binärer Code und genauer gesagt als die binäre Zahl 1 1 1 0 1 0 1 (Dezimal 117) aufgefasst werden. Die im Bereich der Lichttonspur 20 beispielsweise nachträglich mittels eines Lasers ausgebildeten Markierungen 14 können als eine Änderung der optischen Eigenschaften des Zelluoid-Films aufgefasst werden. Beim optischen Auslesen der Lichttonspur 20 und bei der anschließenden Wiedergabe des ausgelesenen Tons machen sich die in den ausgelesenen Toninformationen enthaltenen Markierungen 14 daher in einer den Zelluoid-Film 10 individualisierenden Weise bemerkbar.

Die im Bereich der Lichttonspur 20 ausgebildeten Markierungen besitzen eine Ausdehnung senkrecht zur Ausleserichtung A von typischerweise 50 bis 250 µm. Um einerseits eine hohe Erkennungswahrscheinlichkeit zu gewährleisten und andererseits die Tonwiedergabe nicht merklich zu beeinflussen, hat sich eine Markierungsbreite von ungefähr 80 bis 120 µm als besonders zweckmäßig erwiesen.

Alternativ zu dem Vorsehen einer Abfolge von Markierungen im Bereich der Lichttonspur 20 oder zusätzlich hierzu können derartige Markierungen auch in einem Abschnitt 24 des Bildbereichs 22 ausgebildet werden. Die Markierungen 14 können in einem einzelnen Bild oder in einer Abfolge mehrerer Bilder enthalten sein. Durch die Markierungen werden die optischen Eigenschaften des Zelluoid-Films im Abschnitt 24 des Bildbereichs 22 geändert. Beim (optischen) Auslesen der Bildinformationen wird daher gleichzeitig die Abfolge von Markierungen im Abschnitt 24 ausgelesen.

Die im Abschnitt 24 des Bildbereichs 22 ausgebildeten Markierungen können, wie in Fig. 3a gezeigt, eine Strichfolge sein. Wie in Fig. 3b dargestellt, kann die Abfolge der Markierungen jedoch auch ein Code-Muster sein. Ein derartiges Code-Muster hat den Vorteil, dass es in den wiedergegebenen Bildinformationen weniger störend wirkt. Außerdem gestattet das in Fig. 3b dargestellte Code-Muster eine stärkere Individualisierung, da von dem Code-Muster eine höhere Anzahl einzelner Codes zur Verfügung gestellt wird.

Das in Fig. 3b beispielhaft dargestellte Code-Muster besteht aus einzelnen Code-Spalten oder -Zeilen, die jeweils einem binären Code entsprechen. So entspricht die dritte Code-Spalte von rechts des Code-Musters der binären Zahl 1 0 0 1 1 1 0 1 0 usw.

Die einzelnen Markierungen können derart auf dem Träger ausgebildet sein, dass sie sequentiell in den wiedergegebenen Informationen auftreten. Dies ist beispielsweise bei dem Ausführungsbeispiel gemäß Fig. 3a für die im Bereich der Lichttonspur 20 ausgebildeten Markierungen 14 der Fall. Die einzelnen Markierungen treten nacheinander in dem wiedergegebenen Ton auf. Andererseits ist auch denkbar, dass die Gesamtheit der einzelnen Markierungen gleichzeitig in den wiedergegebenen Informationen auftritt. Dies kann dann der Fall sein, wenn die Markierungen in Bildinformationen enthalten sind (Abschnitt 24 in Figuren 3a und 3b). Es wäre jedoch auch denkbar, dass die einzelnen Markierungen der Markierungsabfolge nacheinander in den Bildinformationen auftreten und damit zeitlich beabstandet wiedergegeben werden. Dies hat den Vorteil, dass die Wahrnehmung der wiedergegebenen Bildinformationen weniger stark beeinflusst ist.

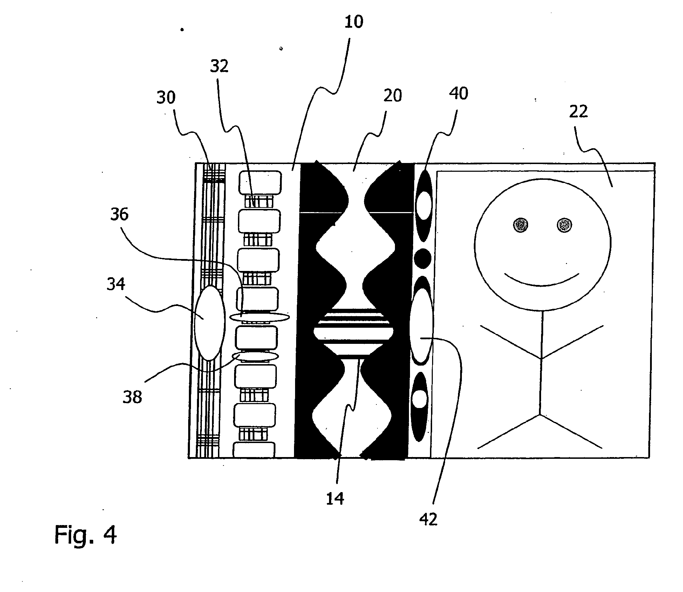

In Fig. 4 ist eine Abwandlung des unter Bezugnahme auf Fig. 3a beschriebenen Ausführungsbeispiels dargestellt. Sich entsprechende Elemente sind wiederum mit übereinstimmenden Bezugszeichen gekennzeichnet.

Wie sich aus Fig. 4 ergibt, sind auf dem als Zelloluid-Film ausgebildeten Träger 10 neben einem ersten Abschnitt mit zur Wiedergabe bestimmten analogen Informationen, nämlich der Lichttonspur 20, zwei weitere Abschnitte 30, 32, die jeweils zur Wiedergabe bestimmte digitale Informationen beinhalten, vorhanden. Bei diesen beiden weiteren Abschnitten handelt es sich um jeweils eine digitale Tonspur 30, 32, die jeweils parallel zur Lichttonspur 20 verläuft. Bei der ganz am Rand des Trägers 10 ausgebildeten digitalen Tonspur 30 handelt es sich um eine Hälfte einer SDDS-Tonspur (die andere Hälfte ist am gegenüberliegenden Rand des Trägers 10 angeordnet). Bei der zwischen den dem Filmtransport dienenden Perforationen ausgebildeten zweiten digitalen Tonspur 32 handelt es sich um eine SRD-Tonspur.

Zusätzlich ist eine Tonsteuerspur 40 (wie beispielsweise eine DTS Zeitcode-Spur) auf dem Träger 10 vorgesehen. Die Steuerspur 40 wird während der Wiedergabe ausgelesen und deren Inhalt einem DTS-Wiedergabegerät übermittelt. Basierend auf den erhaltenen Steuerinformationen synchronisiert das DTS-Wiedergabegerät die Wiedergabe von Bildinformationen mit der Wiedergabe von aus einer DTS CD-ROM ausgelesenen Toninformationen.

Die in den insgesamt drei Tonspuren 20, 30 und 32 enthaltenen und/oder aus der Zeitcode-Spur 40 ableitbaren Informationen stimmen in redundanter Weise miteinander überein. Aus diesem Grund wird üblicherweise lediglich eine einzige der Spuren, häufig die SRD-Tonspur 32, ausgelesen. Die analoge Tonspur 20 wird lediglich dann ausgelesen, wenn das Auslesegerät (z.B. ein Filmprojektor) ein Auslesen der Spuren 30, 32, 40 nicht gestattet oder wenn die Spuren 30, 32, 40 verschmutzt, gestört oder anderweitig nicht auslesbar sind. Mit anderen Worten, bei der Lichttonspur 20 handelt es sich um eine "Rückfalllösung".

Wie Fig. 4 entnommen werden kann, sind die digitalen Tonspuren 30, 32 und die Zeitcode-Spur 40 an zu den Markierungen 14 der Lichttonspur 20 benachbarten Stellen entfernt bzw. wurde an diesen Stellen ein Auslesen verhindert. Genauer gesagt wurden diejenigen Stellen der Spuren 30, 32 und 40, welche hinsichtlich ihres Informationsgehalts den Stellen der Analogspur, im Bereich derer die Markierungen ausgebildet sind, unleserlich gemacht. Zu diesem Zweck wurden mittels eines Lasers fleckenartige Veränderungen 34, 36, 38 und 42 in den beiden digitalen Tonspuren 30, 32 und in der Zeitcode-Spur 40 vorgenommen. Es könnte auch daran gedacht werden, an den Stellen 34, 36, 40, 38 und 42 bereits herstellungsseitig auf ein Anbringen der Spuren 30, 32, 40 zu verzichten bzw. mittels mechanischer Mittel (durch Ritzen, Schaben, usw.) die Spuren 30, 32, 40 an den Stellen 34, 36, 38 und 42 unlesbar zu machen.

Das Fehlen bzw. die Unlesbarkeit digitaler Toninformationen und/oder von Zeitcode-Informationen an den Stellen 34, 36, 38 und 42 bewirkt, dass das Auslesegerät an den Stellen 34, 36, 38 und 42 auf die Lichttonspur 20 zurückgreift und die dort ausgebildeten analogen Informationen ausliest. Gleichzeitig mit den analogen Informationen wird dann auch die Abfolge von Markierungen 14 wie oben beschrieben ausgelesen. Ein Auslesen einer oder beider der digitalen Tonspuren 30, 32 sowie der Zeitcode-Spur 40 wird daher absichtlich vereitelt, um das zwangsweise Auslesen (und Wiedergeben) der Markierungsabfolge 14 zu bewirken.

Das Ausführungsbeispiel gemäß Fig. 4 ist dann besonders interessant, wenn ein digitales Korrekturverfahren Störungen in einer digitalen Informationsspur, wie sie durch die Abfolge von Markierungen erzeugt werden, (z.B. durch Interpolation) beseitigt. Sollte kein Korrekturverfahren eingesetzt werden, könnte die Abfolge von Markierungen auch (ausschließlich oder zusätzlich) in einer der digitalen Informationsspuren angebracht werden.

Wie in Fig. 4 dargestellt, kann sich die Abfolge von Markierungen 14 im Wesentlichen über die Länge eines einzigen Bildes erstrecken. Es wäre jedoch auch denkbar, die Markierungen 14 über mehrere (zwei, drei oder mehr) Bilder verteilt vorzusehen. Die Störungen der Spuren 30, 32 und 40 beginnen zweckmäßiger Weise bereits einige Bilder (z. B. 1, 2 oder mehr Bilder) vor dem Auftreten der Markierungen 14 in der Lichttonspur 20, damit genügend Zeit für ein Umschalten auf die Lichttonspur 20 verbleibt. Es sollte folglich sichergestellt sein, dass die gestörten Stellen 34, 36, 38 und 42 der Spuren 30, 32, 40 so frühzeitig (und so lange) auftreten, dass die Abfolge von Markierungen 14 zu einem Zeitpunkt auftritt, zu dem die Lichttonspur 20 auch tatsächlich ausgelesen wird (bzw. ausgelesen werden kann).

Nachfolgend wird ein Verfahren zum Identifizieren eines der unter Bezugnahme auf die Fign. 1 bis 4 erläuterten Träger näher ausgeführt. Es wird hierbei davon ausgegangen, dass die den Träger individualisierende Abfolge von Markierungen im Bereich der Toninformationen ausgebildet ist und zusammen mit den Toninformationen ausgelesen wird. Weiterhin wird davon ausgegangen, dass die Stelle, an der die Abfolge der Markierungen in den Toninformationen enthalten sind, bekannt ist.

Wurden die Toninformationen aus einem mit den Markierungen versehenen Bereich des Trägers ausgelesen, werden diese Informationen unmittelbar oder nach deren Wiedergabe und akustischen Erfassung einer Spektralanalyse in einem Spektral-Analysator unterzogen. Gleichzeitig wird eine geeignete Tonfilterung durchgeführt. Korrespondierende Referenz-Toninformationen, welche die Markierungen nicht enthalten, werden denselben Aufbereitungsmechanismen unterzogen wie die ausgelesenen Toninformationen. Anschließend werden die derart aufbereiteten Referenz-Toninformationen von den aufbereiteten ausgelesenen Toninformationen subtrahiert.

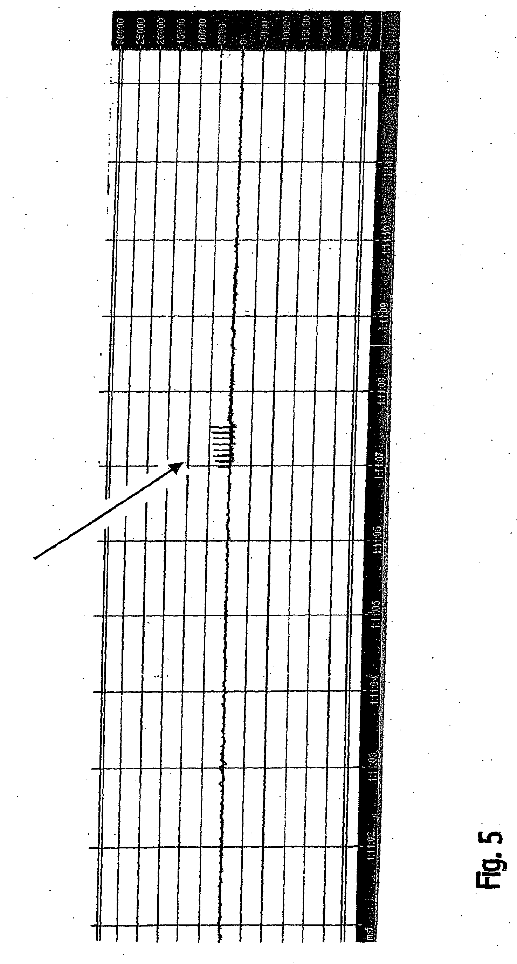

Das Ergebnis der Subtraktion ist in Fig. 5 dargestellt. Deutlich zu erkennen ist die Abfolge einzelner Peaks, welche der in den ausgelesenen Toninformationen enthaltenen Abfolge von Markierungen (im Beispielfall gemäß Fig. 5: 8 aufeinander folgende Markierungen = binär 1 1 1 1 1 1 1 1) entspricht. Die Lage, Höhe und Breite der Peaks (d.h. Tonhöhe/Lautstärke) lassen sich durch Beabstandung, Intensität und Dimensionierung der auf dem Träger ausgebildeten Markierungen gezielt beeinflussen. Zweckmäßigerweise liegt die Lautstärke der Markierungen wenigstens 5 dB und vorzugsweise wenigstens 10 dB über dem Lautstärke-Grundpegel der Referenz-Informationen.

Obwohl die Abfolge von Markierungen in dem ausgelesenen Tonsignal für ein Publikum nicht oder kaum wahrnehmbar ist, kann mittels geeigneter Verfahren die Abfolge von Markierungen somit jederzeit ermittelt und der vorliegende Träger eindeutig identifiziert werden. Eine Besonderheit des Verfahrens ist, dass die einem Ur-Träger einmal zugeordnete Kennzeichnung auch beim Vervielfältigen des Ur-Trägers und insbesondere bei einer Änderung des Datenformats der akustischen Informationen (z.B. analog -> digital) erhalten bleibt.

Die unter Bezugnahme auf Fign. 1 bis 4 erläuterten Ausführungsbeispiele illustrieren die der Erfindung zugrunde liegenden Gedanken, können aber nicht einschränkend interpretiert werden. Insbesondere können auch anderweitige Informationsträger sowie andere Markierungen zum Einsatz gelangen. Auch die Anordnung der zur Wiedergabe bestimmten Informationen auf dem Träger kann abweichend von den Ausführungsbeispielen gewählt werden. So ist es denkbar, die in einer kontinuierlichen Abfolge auf dem Träger enthaltenen Informationen an separaten und voneinander beabstandeten Stellen des Trägers anzuordnen. Mittels geeigneter Auslesemechanismen kann auch in diesem Fall gewährleistet werden, dass die an unterschiedlichen Stellen ausgelesenen kontinuierlichen Informationen tatsächlich auch kontinuierlich wiedergegeben werden. Sofern lediglich einfachere Auslesemechanismen zur Verfügung stehen, ist eine logische Aneinanderreihung der kontinuierlichen Informationsabfolge auf dem Träger jedoch oftmals unumgänglich.

## Patentansprüche

1. Verfahren zum Kennzeichnen eines maschinell auslesbaren Trägers (10), der Informationen beinhaltet, die in einer kontinuierlichen Abfolge auf dem Träger enthalten und zur Wiedergabe bestimmt sind, **dadurch gekennzeichnet dass** im Bereich der zur Wiedergabe bestimmten Informationen eine den Träger individualisierende Abfolge von Markierungen (14) ausgebildet wird, die zusammen mit den zur Wiedergabe bestimmten Informationen auslesbar ist.

2. Verfahren nach Anspruch 1, **dadurch gekennzeichnet, dass** die Markierungen derart ausgebildet werden, dass die Wiedergabe der Informationen in einer den Träger individualisierenden Weise geändert wird.

3. Verfahren nach Anspruch 1 oder 2, **dadurch gekennzeichnet, dass** es sich bei den zur Wiedergabe bestimmten Informationen um Toninformationen handelt.

4. Verfahren nach einem der Ansprüche 1 bis 3, **dadurch gekennzeichnet, dass** es sich bei den zur Wiedergabe bestimmten Informationen um Bildinformationen handelt.

5. Verfahren nach einem der Ansprüche 1 bis 4, **dadurch gekennzeichnet, dass** es sich bei den zur Wiedergabe bestimmten Informationen um analoge Informationen handelt.

6. Verfahren nach einem der Ansprüche 1 bis 5, **dadurch gekennzeichnet, dass** die Markierungen zeitlich getrennt von den zur Wiedergabe bestimmten Informationen auf dem Träger ausgebildet werden.

7. Verfahren nach einem der Ansprüche 1 bis 6, **dadurch gekennzeichnet, dass** die Markierungen durch Änderung von magnetischen und/oder mechanischen Eigenschaften des Trägers ausgebildet werden.

8. Verfahren nach einem der Ansprüche 1 bis 7, **dadurch gekennzeichnet, dass** der Träger (10) in einem ersten Abschnitt (20) zur Wiedergabe bestimmte analoge Informationen und in wenigstens einem zweiten Abschnitt (30, 32) in redundanter Weise zur Wiedergabe bestimmte digitale Informationen enthält und die Abfolge von Markierungen (14) im ersten Abschnitt (20) ausgebildet werden.

9. Verfahren nach einem der Ansprüche 1 bis 8, **dadurch gekennzeichnet, dass** die Markierungen mittels eines Lasers ausgebildet werden.

10. Maschinell auslesbarer Träger (10) für Informationen, die in einer kontinuierlichen Abfolge auf dem Träger enthalten und zur Wiedergabe bestimmt sind, **dadurch gekennzeichnet**
**dass** im Bereich der zur Wiedergabe bestimmten Informationen eine den Träger individualisierende Abfolge von Markierungen (14) ausgebildet ist, die zusammen mit den zur Wiedergabe bestimmten Informationen auslesbar ist.

11. Träger nach Anspruch 10, **dadurch gekennzeichnet, dass** der Träger im Wesentlichen planar und insbesondere bandförmig ist.

12. Träger nach Anspruch 10 oder 11, **dadurch gekennzeichnet, dass** es sich bei der Abfolge von Markierungen um einen Identifizierungs-Code (16) handelt.

13. Träger nach einem der Ansprüche 10 bis 12, **dadurch gekennzeichnet, dass** die Markierungen derart ausgebildet sind, dass die Wahrnehmung der wiedergegebenen Informationen seitens eines Publikums nicht oder nur kaum beeinflusst ist.

14. Träger nach einem der Ansprüche 10 bis 13, **dadurch gekennzeichnet, dass** sich eine einzelne der Markierungen zumindest senkrecht zu der Auslese-richtung (A) erstreckt.

15. Träger nach einem der Ansprüche 1 bis 14, **dadurch gekennzeichnet, dass** auf dem Träger (10) in einem ersten Abschnitt (20) zur Wiedergabe bestimmte analoge Informationen und in wenigstens einem zweiten Abschnitt (30, 32) zur Wiedergabe bestimmte digitale Informationen enthalten sind, wobei die Markierungen (14) im ersten Abschnitt (20) ausgebildet sind.

16. Träger nach Anspruch 15, **dadurch gekennzeichnet, dass** sich die analogen und digitalen Informationen entsprechen.

17. Träger nach Anspruch 16, **dadurch gekennzeichnet, dass** die digitalen Informationen, die solchen analogen Informationen entsprechen, im Bereich derer die Markierungen (14) ausgebildet sind, nicht vorhanden und/oder nicht auslesbar sind.

18. Träger nach Anspruch 17, **dadurch gekennzeichnet, dass** der Träger (10) dort, wo die nicht auslesbaren digitalen Informationen ausgebildet sind oder waren, nachträglich geänderte optische Eigenschaften aufweist.

19. Träger nach einem der Ansprüche 15 bis 18, **dadurch gekennzeichnet, dass** der erste Abschnitt (20) eine Lichttonspur ist.

20. Träger nach einem der Ansprüche 15 bis 19, **dadurch gekennzeichnet, dass** der zweite Abschnitt (30, 32) eine digitale Tonspur ist.

21. Träger nach den Ansprüchen 19 und 20, **dadurch gekennzeichnet, dass** die digitale Tonspur (30, 32) an einer zu den Markierungen (14) auf der Lichttonspur (20) benachbarten Stelle nicht vorhanden und/oder nicht auslesbar ist.

22. Gekennzeichneter Träger enthaltend zur Wiedergabe bestimmte Informationen, erhalten durch Kopieren eines Trägers (10) nach einem der Ansprüche 10 bis 21.

23. Verfahren zum Identifizieren eines Trägers (10) nach einem der Ansprüche 10 bis 22, umfassend
- maschinelles Auslesen der auf dem Träger enthaltenen und zur Wiedergabe bestimmten Informationen in einem mit den Markierungen (14) versehenen Bereich des Trägers;
- Auswerten der ausgelesenen Informationen zum Ermitteln der Abfolge von Markierungen; und
- Identifizieren des Trägers auf der Grundlage der ermittelten Abfolge von Markierungen.

24. Verfahren nach Anspruch 23, **dadurch gekennzeichnet, dass** das Ermitteln der Abfolge der Markierungen eine Bild- und/oder Spektral-Analyse umfasst.

25. Verfahren nach Anspruch 23 oder 24 , ferner enthaltend
- Bereithalten von Referenz-Informationen; und
- Vergleichen der vom Träger ausgelesenen und zur Wiedergabe bestimmte Informationen mit den Referenz-Informationen zur Identifizierung der Markierungen.
